# EUROPÄISCHE PATENTSCHRIFT

(11) **EP 1 361 103 B1**
(45) Veröffentlichungstag und Bekanntmachung des Hinweises auf die Patenterteilung: **10.10.2012**
(21) Anmeldenummer: 03009389.2
(22) Anmeldetag: 25.04.2003
(51) Int. Cl.: B60L 5/22

(54) **Wippe für einen Stromabnehmer**
Pantograph for a current collector
Pantographe pour une prise de courant

(30) Priorität: 26.04.2002 DE 10218909; 03.05.2002 DE 10219945; 24.10.2002 DE 10249774
(43) Veröffentlichungstag der Anmeldung: 12.11.2003
(73) Patentinhaber: Schunk Bahntechnik GmbH, 5101 Bergheim bei Salzburg (AT)
(72) Erfinder: Santner, Josef, 5101 Bergheim (AT)
(74) Vertreter: Stoffregen, Hans-Herbert

(56) Entgegenhaltungen:
- EP-A- 0 444 973
- EP-A- 0 844 131
- DE-A- 19 715 397
- US-A- 3 495 051

## Beschreibung

Die Erfindung bezieht sich auf eine Wippe für einen Stromabnehmer für elektrisch betriebene Fahrzeuge umfassend quer zur Fahrzeuglängsachse verlaufende Schleifleisten, jeweils zwei von jeder Schleifleiste ausgehende Hebeleinrichtungen, die mit in in Fahrzeuglängsachse sich erstreckenden Tragrohren verlaufenden Halteelementen verbunden sind, ein quer zur Fahrzeugslängsachse verlaufendes Tragorgan wie Scheitelrohr, das mit den Tragrohren verbunden ist, sowie Federeinrichtungen, die von den Hebeleinrichtungen erzeugte erste Drehmomente entgegengerichtete zweite Drehmomente erzeugen.

Eine entsprechende Wippe ist der DE-A- 190 51 677 (WO-A- 02/32714 ) zu entnehmen. Dabei handelt es sich bei der Federeinrichtung um eine Torsionsfeder mit zylindrischen Haltestücken, von denen eines mit dem Halteelement und ein anderes mit der Hebeleinrichtung verbunden ist. Die Torsionsfeder ist von einem Schutzrohr umgeben. Bei der Torsionsfeder selbst handelt es sich um einen Sechskantstab mit definiertem Torsionsmodul. Durch den konstruktiven Aufbau der Torsionsfeder bedingt ergibt sich ein recht steifes Gebilde. In Abhängigkeit von dem auf die Torsionsfeder einwirkenden Drehmoment erfolgt eine Verkürzung der Torsionsfeder. Ferner sind die von jeweils gleichem Ende der Schleifleiste ausgehenden Hebelelemente über einen Rahmen verbunden, so dass eine unabhängige Bewegung nicht erfolgen kann.

Ein Stromabnehmer mit zwei Doppelschleifleisten ist aus der DE-A- 21 21 613 bekannt. Die Doppelschleifleisten sind über Gummifedergelenke mit Balken verbunden, die ihrerseits über Gummifedergelenke mit einem Scheitelrohr verbunden sind.

Eine Anordnung zur federnden Abstützung einer Scherenstromabnehmerwippe mittels einer Drehstahlfeder wird in der DD-A- 149 677 beschrieben.

Bei der aus der DE-A- 42 19 112 zu entnehmenden Wippe für Stromabnehmer sind Tragelemente als Druckstäbe ausgebildet, von denen elastische Zugmittel ausgehen, die zu dem Tragorgan in Form eines Scheitelrohres führen. Als Zugmittel kommen gewellte Flachfedern, elastische Druckstäbe o. ä. in Frage. Durch die Wahl der Zugmittel ist eine feste Federkennlinie vorgegeben, die gewünschte Veränderungen der von den Schleifleisten auf einen Fahrdraht ausübenden Drücke nicht ermöglichen. Von Nachteil ist des Weiteren, dass in Abhängigkeit von dem auf die Wippe einwirkendem Staudruck eine Verschiebung der Wippe derart erfolgt, dass die von dem Scheitelrohr ausgehenden und mit dem Wippenrahmen verbundenen Federn unterschiedlich gespannt sind. Dies wiederum bedeutet, dass die Schleifleisten bzw. Schleifstücke mit unterschiedlichen Drükken an einem Fahrdraht anliegen.

Der vorliegenden Erfindung liegt das Problem zu Grunde, eine Wippe der eingangs genannten Art so weiterzubilden, dass insbesondere durch Staukräfte bedingte aerodynamische Einflüsse auf die Arbeitsweise der Wippe minimiert bzw. eliminiert werden.

Es soll verhindert werden, dass die auf die Schleifleiste wirkende Staudruckkraft einen Einfluss auf die Arbeit der Wippenfeder nimmt. Das heißt, es soll durch die Staudruckkraft keine auf die Wippenfeder wirkende Kraftkomponente entstehen, welche von der Feder zusätzlich zur Anpresskraft aufgenommen werden müsste.

Auch soll nach einem Aspekt der Erfindung sichergestellt werden, dass ein durch die Einwirkung von Staudruck erfolgendes Kippen bzw. Drehen der Wippe um die quer zur Fahrzeuglängsachse verlaufende Drehachse unterbleibt.

Erfindungsgemäß wird das Problem im Wesentlichen dadurch gelöst, dass jede Hebeleinrichtung mit einer sich in einem der Tragrohre erstreckenden das Halteelement bildenden Welle verbunden ist, dass die Welle über zumindest ein erstes Lager in dem Tragrohr axial und radial gelagert ist, dass das erste Lager ortsfest mit dem Tragrohr verbunden ist und dass von der Welle oder einer mit der Welle ortsfest verbundenen Halterung die Federeinrichtung ausgeht, die ihrerseits mit dem ersten Lager verbunden ist, wobei in jedem Tragrohr zwei Wellen axial und radial unabhängig voneinander gelagert angeordnet sind, von denen jeweils eine mit einer von einer der Schleifleisten ausgehenden Hebeleinrichtung verbunden ist. Dabei kann das erste Lager ein erster Lagerbock sein, der im Bereich eines ersten Endes der Welle angeordnet ist. Im Bereich des zweiten Endes der Welle ist ein zweiter die Welle drehbar abstützender Lagerbock in dem Tragrohr angeordnet.

Da die vom jeweils gleichen Ende der Schleifleisten ausgehenden Hebeleinrichtungen untereinander nicht verbunden sind, erfolgt eine entkoppelte Bewegung.

Die Wippe wird somit und in Abweichung vom Stand der Technik von insgesamt vier Federeinrichtungen abgefedert, die ihrerseits auf Wellen Drehmomente ausüben, um die von den Hebeleinrichtungen übertragenen Drehmomente zu kompensieren.

Wird nach der erfindungsgemäßen Lehre das Drehmoment auf eine drehbar gelagerte und gegen ein axiales Verschieben gesicherte starre Welle übertragen, so wird nach dem gattungsbildenden Stand der Technik eine Torsionsfeder verwendet, von deren Enden jeweils eine Hebeleinrichtung ausgeht, die untereinander durch einen Rahmen verbunden sind. Folglich wird ein elastisches nachgiebiges Konstruktionselement zur Erzeugung von Gegendrehmomenten benutzt. Dabei ist neben dem Nachteil der Kopplung des Weiteren in Kauf zu nehmen, dass eine axiale Veränderbarkeit gegeben ist, die bei ausschließlich Lagerfunktion und Übertragung von Drehmomenten ausübenden Wellen nach der erfindungsgemäßen Lehre nicht gegeben ist.

Die Wellen sind untereinander nicht gekoppelt, genauso wie die mit diesen vom jeweiligen gleichen Ende ausgehenden Hebeleinrichtungen, über die die Drehmomente auf die Wellen übertragen werden.

Die Halterung für die Federeinrichtung ist vorzugsweise ein von der Welle abragender Flansch.

Durch die erfindungsgemäße Lehre wird die Staudruckkraft durch die axiale Lagerung der Welle aufgenommen, so dass ein Verschieben der Schleifleisten in Bezug auf das Tragorgan in Richtung der Fahrzeuglängsachse ausgeschlossen ist.

Die vom Fahrdraht auf die Schleifleiste und damit Schleifstückträger wirkenden Anpresskräfte werden über die Hebeleinrichtungen auf die jeweilige Welle übertragen. Somit wirken auf die innerhalb der Tragrohre gelagerten Wellen Drehmomente ein, die über Federelemente in gewünschtem Umfang kompensiert werden. Hierdurch wird erreicht, dass im erheblichen Umfang die Anpresskräfte nicht von der Verstellfeder des Stromabnehmers aufgenommen werden müssen. Die entsprechende Feder muss vielmehr erst Kraftspitzen aufnehmen.

Um das auf die Welle übertragene Drehmoment abzufedern, sieht die Erfindung vor, dass die Welle in dem Tragelement drehbar gelagert und mit einem einer Drehbewegung entgegengerichteten Federelement verbunden ist. Dabei kann es sich bei dem Federelement um eine Drehfeder handeln, die einerseits an der Welle und andererseits an bzw. in dem Tragelement wie an einem Lagerbock der Welle fixiert ist.

Insbesondere handelt es sich bei der Federeinrichtung um eine Schraubenfeder, die die Welle koaxial umgibt.

Für die Abstimmung der Federung auf unterschiedliche Randbedingungen wie z. B. Schleifstückgewicht, geforderte Anpresskraft oder geforderte Federungsprogression kann das Federelement entsprechend angepasst werden. Dabei kann die Feder so ausgelegt werden, dass sich eine Nichtlinearität derart ergibt, dass bei größeren Drehmomenten die Steifigkeit der Feder zunimmt. Um eine progressive Federkennlinie zu erreichen, kann gegebenenfalls zusätzlich ein weiteres Federelement wie Biegefeder oder Federstab integriert werden, das von einem bestimmten Drehwinkel der Welle ab eingreift und somit die gesamte Federkonstante verändert bzw. erhöht.

Um die Drehbewegung der Welle einzuschränken, ist des Weiteren vorgesehen, dass von der Welle ein Vorsprung wie Stift ausgeht, der zwischen zwei ortsfesten von dem Tragrohr oder z. B. der die Welle abstützenden Lagerung ausgehenden Endanschlägen verläuft.

Die Hebeleinrichtung besteht aus einem von dem Schleifstückträger ausgehenden Tragarm und einem mit diesem gelenkig verbundenen Schwenkhebel, der seinerseits mit der Welle verbunden ist. Dabei schließen Tragarm und Schwenkhebel im Normalbetrieb vorzugsweise einen stumpfen Winkel der Wippe ein, wobei sich der Winkel bei zunehmendem Federweg ändert.

Die auf die Welle einwirkenden Drehmomente entgegenwirkenden Federn bzw. Federpakete sind in den Tragelementen angeordnet und somit geschützt. Gleichzeitig ergibt sich insbesondere bei einem Hochgeschwindigkeitseinsatz der Vorteil, dass eine unerwünschte Lärmemission (Aeroakustik) unterbunden wird und zusätzlich eine Vergrößerung des Luftwiderstandes (Aerodynamik) unterbleibt.

Des Weiteren kann durch Wahl der Länge des Tragrohrs der Schleifstückabstand vorgegeben werden. Auch kann problemlos eine Federeinstellung zur Adaption an Anpresskräfte erfolgen.

Nach einem eigenerfinderischen Vorschlag der Erfindung ist vorgesehen, dass die Tragrohre, in denen die Federeinrichtungen angeordnet sind, mittels Schräglenkerhebel an dem auch als Scheitelgelenkwelle zu bezeichnenden Scheitelrohr angelenkt sind. Dabei sind die Anlenkpunkte zwischen den Schräglenkerhebeln einerseits mit dem Tragrohr und andererseits mit der Scheitelgelenkwelle bzw. dem Scheitelrohr so gewählt, dass Schnittpunkt der Verlängerungen der jeweiligen Anlenkpunkte zu einem fiktiven Drehpunkt führt, um die sich die Wippe dreht, wobei der fiktive Drehpunkt höhenmäßig so ausgerichtet sein sollte, dass dieser in etwa in derselben Höhe verläuft, in der der Schwerpunkt der projizierten Wippenfrontfläche bzw. Angriffspunkt der Staudruckkraft verläuft. Somit kann die Staudruckkraft kein bzw. nur ein minimales Drehen bzw. Rotieren der Wippe bewirken.

Mit anderen Worten kann ein Rotieren bzw. Schwenken der Wippe verursacht durch hohe Staudruckkräfte im Hochgeschwindigkeitsbetrieb weitgehend verhindert bzw. stark minimiert werden. Somit wird eine ungleichmäßige Anpresskraftverteilung zwischen den Schleifleisten und dem Fahrdraht vermieden. Nach dem Stand der Technik können entsprechende ungleichmäßige Anpresskraftverteilungen allein durch den Einsatz von sogenannten Windleitblechen bzw. Staublechen verhindert werden.

Die erfindungsgemäße Lehre unterscheidet sich von den vorbekannten Wippen insbesondere dadurch, dass voneinander unabhängige Federn zum Kompensieren von Schwankungen der Anpresskraft genutzt werden, also eine Kopplung untereinander unterbleibt. Des Weiteren erfolgt eine Schräglenkeraufhängung derart, dass der Staudruckeinfluss auf die Anpresskraftverteilung zwischen den Schleifleisten weitgehend eliminiert wird.

Erfindungsgemäß wird eine Rotationsfederwippe zur Verfügung gestellt, bei der die zu federnde Masse über vier Federeinrichtungen abgefedert wird. Die Anpresskraft, die auf die Schleifleisten wirkt, wird über Hebelverbindungen auf in Fahrtrichtung verlaufende Wellen übertragen, die im Inneren der Tragrohre gelagert sind. Dabei werden auf die Wellen eingeleitete Drehmomente über Federn abgefedert.

Außerdem arbeitet die erfindungsgemäße Wippe nach dem Schräglenkerprinzip. Dies bedeutet, dass das Tragrohr, das das gesamte Federpaket enthält, mittels Schräglenkerhebel an der Scheitelgelenkwelle oder an dem Scheitelrohr aufgehängt ist. Hierdurch bedingt kann der Einfluss der Staudruckkraft auf die Anpresskraftaufteilung zwischen den Schleifleisten minimiert bzw. eliminiert werden.

Alternativ besteht die Möglichkeit, die Gegendrehmomente über sich in Längsrichtung der Welle erstreckende Stabfedern als die Federeinrichtung zu erzeugen. Die Stabfedern können dabei mit dem ersten Lager wie Lagerbock verbunden sein und durchsetzen ein von der Welle abragenden Flansch. Dieser weist entsprechende Durchbrechungen wie Bohrungen auf, die von den Stabfedern axial verschiebbar durchsetzbar sind.

Für die Abstimmung der Federung auf unterschiedliche Randbedingungen wie zum Beispiel Schleifstückgewicht, geforderte Anpresskraft oder geforderte Federungsprogression kann die Anzahl bzw. Auslegung der Stabfedern entsprechend angepasst werden. Hierbei kann auch eine Nichtlinearität vorgegeben werden, so dass bei größeren Drehmomenten die Steifigkeit der Federeinrichtung zunimmt. Um eine progressive Federkennlinie zu erreichen, kann gegebenenfalls zusätzlich ein weiteres Federelement integriert werden, das von einem bestimmten Drehwinkel der Welle ab eingreift und somit die gesamte Federkonstante verändert bzw. erhöht. Bei dem zusätzlichen Federelement kann es sich um eine Biegefeder oder um einen Federstab handeln.

Des Weiteren sollten die Stabfedern eine Umhüllende aufspannen, die koaxial zu der Welle verläuft und auf der die Stabfedern zueinander vorzugsweise gleichmäßig beabstandet angeordnet sind. Die Umhüllende kann einen Querschnitt von einem Kreis, einer Ellipse, einem Vieleck wie Viereck o. ä. aufweisen. Dabei ist es nicht zwingend erforderlich, dass sämtliche Biegestabfedern entlang der Umhüllenden verlaufen.

Somit wird die Wippe bei der Verwendung von Stabfedern als die Federeinrichtungen über vier jeweils Stabfedern umfassende Federpakete abgefedert.

Weitere Einzelheiten, Vorteile und Merkmale der Erfindung ergeben sich nicht nur aus den Ansprüchen, den diesen zu entnehmenden Merkmalen, - für sich und/oder in Kombination -, sondern auch aus der nachfolgenden Beschreibung eines der Zeichnung zu entnehmenden bevorzugten Ausführungsbeispiels.

Es zeigen:
- Fig. 1: eine Vorderansicht einer Wippe eines Stromabnehmers,
- Fig. 2: eine Seitenansicht der Wippe gemäß Fig. 1,
- Fig. 3: ein in vergrößerter Darstellung und im Ausschnitt dargestelltes erstes Ausführungsbeispiel eines Regelelementes für eine Schleifleiste der Wippe nach den Fig. 1 und 2 und
- Fig. 4: ein weiteres Ausführungsbeispiel eines Regelelementes für eine Schleifleiste der Wippe nach den Fig. 1 und 2.

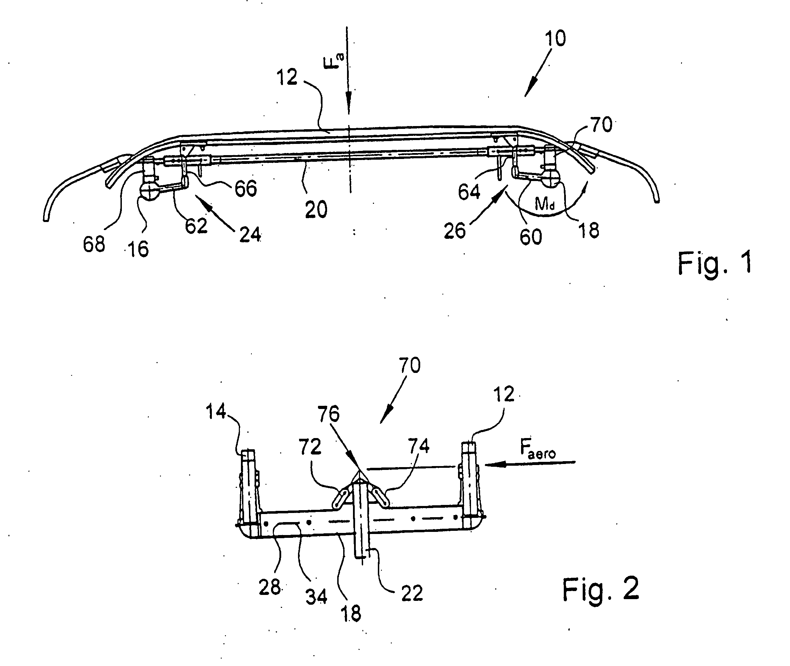

In den Fig. 1 und 2 ist rein prinzipiell eine Wippe 10 eines Stromabnehmers für elektrisch betriebene Fahrzeuge dargestellt, die in bekannter Weise parallel zueinander und quer zur Fahrzeuglängsachse verlaufende Schleifleisten 12, 14 aufweist, die ihrerseits aus Schleifstückträgern und von diesen aufgenommenen Schleifstücken bestehen kann. Die Schleifleisten 12, 14 mit nicht näher bezeichneten Auflaufhömern sind ihrerseits über Tragrohre 16, 18 mit einer Scheitelgelenkwelle oder einem Scheitelrohr 20 verbunden, das seinerseits mit dem Oberarm des Stromabnehmers 10 gelenkig verbunden ist.

Auf die Wippe 10, d. h. die Schleifstücke der Schleifleisten 12, 14 wirken von einem nicht dargestellten Fahrdraht stammende Anpresskräfte Fₐ. Des Weiteren wirkt auf die Wippe ein Staudruck Fₐₑᵣₒ' wobei wirksamer Angriffspunkt des Staudrucks Fₐₑᵣₒ ungefähr mit dem Flächenschwerpunkt der Wippe 10 zusammenfällt. Um ein Verstellen der über das Tragrohr 18 verbundenen Schleifleisten 12, 14 zu dem Scheitelrohr 20 auszuschließen, bei gleichzeitiger Abfederung der auf die Schleifleisten 12, 14 einwirkenden Anpresskraft Fₐ, ist folgende Konstruktion vorgesehen.

Die Schleifleisten 12, 14 sind über Hebeleinrichtungen 24, 26 jeweils mit einer Welle 28 verbunden, die in dem Tragrohr 18 axial und radial gelagert sind. Dabei nimmt jedes Tragrohr 16, 18 jeweils zwei Wellen 28 auf. Die Welle 28 ist derart in dem Tragrohr 18 angeordnet, dass deren Axiallagerung die Staudruckkraft Fₐₑᵣₒ aufnimmt. Gleichzeitig kann jedoch das über die Hebeleinrichtung 24 bzw. 26 auf die Welle 28 übertragene Drehmoment im erforderlichen Umfang kompensiert bzw. abgefedert werden. Das Gegendrehmoment wird dabei über eine die Welle 28 umgebende Feder wie Schraubenfeder 34 erzeugt, die einerseits fest mit der Welle 28 verbunden ist und andererseits in dem Tragrohr 18 fixiert ist, und zwar nach dem Ausrührungsbeispiel in einem Lagerbock 36 für die Welle 28. Der Lagerbock 36 wird dabei von einem Wellenende 30 der Welle 28 durchsetzt. Auch erkennt man durch den in dem Lagerbock 36 im oberen Teil eingezeichneten Kreis 40 das Ende der Schraubenfeder 34. Das mit der Welle 28 fest verbundene Ende 42 der Schraubenfeder 34 wird in einer Scheibe 44 festgelegt, die ihrerseits fest mit der Welle 28 verbunden ist.

Von dem Wellenende 30 geht des Weiteren ein Stift oder Stabelement 46 aus, das sich zwischen Festanschlägen 48, 50 erstreckt, die vom Inneren des Trägerrohrs 18 ausgehen. Hierdurch wird der maximale Drehwinkel der Welle 28 vorgegeben.

Um bei eingeleitetem Drehmoment M_{d} die diesem entgegengerichtete Federkraft zu erhöhen, ist vorgesehen, dass von der Welle 28 ein zweites Scheibenelement 52 mit Vorsprüngen 54, 56 ausgeht, zwischen denen sich ein in Längsrichtung des Tragrohres 18 erstreckendes weiteres Federelement 58 wie Stabfeder oder Federstab erstreckt. Gelangt einer der Vorsprünge 54, 56 mit dem Federelement 58 in Berührung, so wird hierdurch die auf die Welle 28 einwirkende Gesamtfederkraft erhöht.

Alternativ oder ergänzend könnte die Welle 28 auch mit einem das Gegendrehmoment erzeugende Federelement mit nicht linearer Kennlinie verbunden werden. Andere gleichwirkende Elemente sind gleichfalls von der erfindungsgemäßen Lehre erfasst.

Die Welle 28 ist ihrerseits mit einer der von den Schleifleisten 12, 14 ausgehenden Hebelverbindung 24, 26 verbunden, und zwar mit deren Schwenkhebel 60, 62, der seinerseits gelenkig mit einem Tragarm 64, 66 verbunden ist, der an der Schleifleiste 12, 14 angelenkt ist. Dabei schließt der Tragarm 64, 66 mit dem starr mit der Welle 28 verbundenen Schwenkhebel 60, 62 einen Winkel von in etwa 90°, vorzugsweise einen stumpfen Winkel ein.

Zur Abstimmung der Federung auf unterschiedliche Randbedingungen wie z. B. Schleifstückgewicht, geforderte Anpresskraft Fₐ oder geforderte Federungsprogression kann das im Ausführungsbeispiel aus der Schraubenfeder 34 und dem Federstab 58 zusammengesetzte Federsystem entsprechend angepasst werden.

Die Tragrohre 16, 18 sind mit dem Scheitelrohr 20 über Schräglenkeraufhängungen 68,70 verbunden, die aus gelenkig einerseits mit dem Tragrohr 18 und andererseits mit dem Scheitelrohr 20 verbundene Hebel 72, 74 bestehen, wobei die Verlängerung von die Anlenkpunkte durchsetzenden Geraden sich in einem fiktiven Drehpunkt 76 der Wippe 10 schneiden, der in der Höhe des Angriffspunkt der Staudruckkraft Fₐₑᵣₒ verläuft. Hierdurch wird auch bei hohen Staudruckkräften ein sogenanntes Drehen bzw. Rotieren der Wippe 10 unterbunden, wodurch wiederum ungleichmäßige Anpresskraftverteilungen auf die Schleifleisten 12, 14 bzw. die Schleifstücke unterbunden werden.

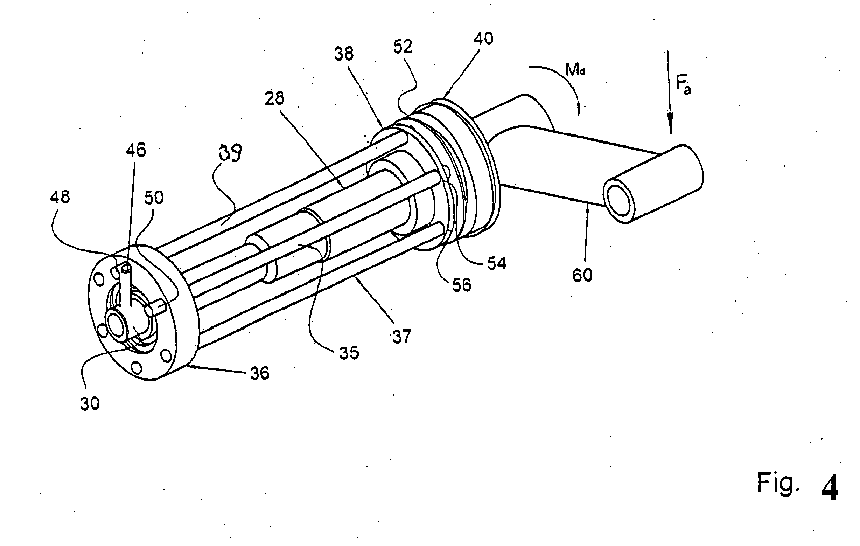

Der Fig. 4, in der grundsätzlich die gleichen Bezugszeichen wie in den Fig. 1 bis 3 verwendet werden, ist eine weitere Ausführungsform eines Regelelementes zu entnehmen, um die von der Hebeleinrichtung 24, 26 übertragenen Drehmomente zu kompensieren. Dabei wird das Gegendrehmoment über entlang der Welle 28 verlaufende Stabfedern 35, 37, 39 erzeugt. Die Stabfedern 35, 37, 39 sind fest mit einem Lagerbock 36 verbunden, der seinerseits nicht drehbar, also ortsfest mit dem Tragrohr 18 verbunden ist. Mit ihren anderen Enden durchsetzen die Stabfedern 34, 35, 37 Bohrungen eines Flansches 38, der mit der Welle 28 verbunden ist. Die Welle ist des Weiteren axial und radial über den Lagerbock 36 sowie im Bereich ihres anderen Endes vorhandenen Lagerbocks 40 gelagert.

Von der Welle 28, und zwar von ihrem den Lagerbock 36 durchsetzenden Ende 30 geht ebenfalls ein Anschlagstift 46 aus, der sich zwischen Festanschlägen 48, 50 erstreckt, die von äußerer Stirnfläche des Lagerbocks 36 abragen, der erwähntermaßen nicht drehbar mit dem Tragrohr 18 verbunden ist. Durch das Zusammenwirken zwischen dem Anschlagstift 46 und den Anschlägen 48, 50 erfolgt eine Vorspannung der Federeinrichtung bzw. eine mechanische Hubbegrenzung der Wippe.

Durch die Anzahl bzw. Länge bzw. Querschnitt der Biegestabfedern 35, 37, 39 kann die Gesamtfederkonstante der Federeinrichtung den Anforderungen entsprechend angepasst werden. Unabhängig hiervon sollten die Biegestabfedern 35, 37, 39 auf einem Zylindermantel angeordnet sein, der koaxial die Welle 28 umgibt. Des Weiteren sollten die Biegestabfedern 35, 37, 39 zueinander äquidistant auf dem Zylindermantel verlaufen.

Die Welle 28 ist ihrerseits mit den von der von den Schleifleisten 12, 14, ausgehenden Hebeleinrichtungen 24, 26 verbunden, und zwar mit dem jeweiligen Schwenkhebel 60, 62, der seinerseits gelenkig mit dem Tragarm 64, 66 verbunden ist, der an der Schleifleiste 12, 14 angelenkt ist. Dabei schließt der Tragarm 64, 66 mit dem starr mit der Welle 28 verbundenen Schwenkhebel 60, 62 einen Winkel von in etwa 90°, vorzugsweise einen stumpfen Winkel ein.

Zur Abstimmung der Federung auf unterschiedliche Randbedingungen wie zum Beispiel Schleifstückgewicht, geforderte Anpresskraft Fₐ oder geforderte Federungsprogression kann erwähntermaßen die Anzahl der Biegestabfedern 35, 37, 39 bzw. deren Dimensionierung entsprechend angepasst werden.

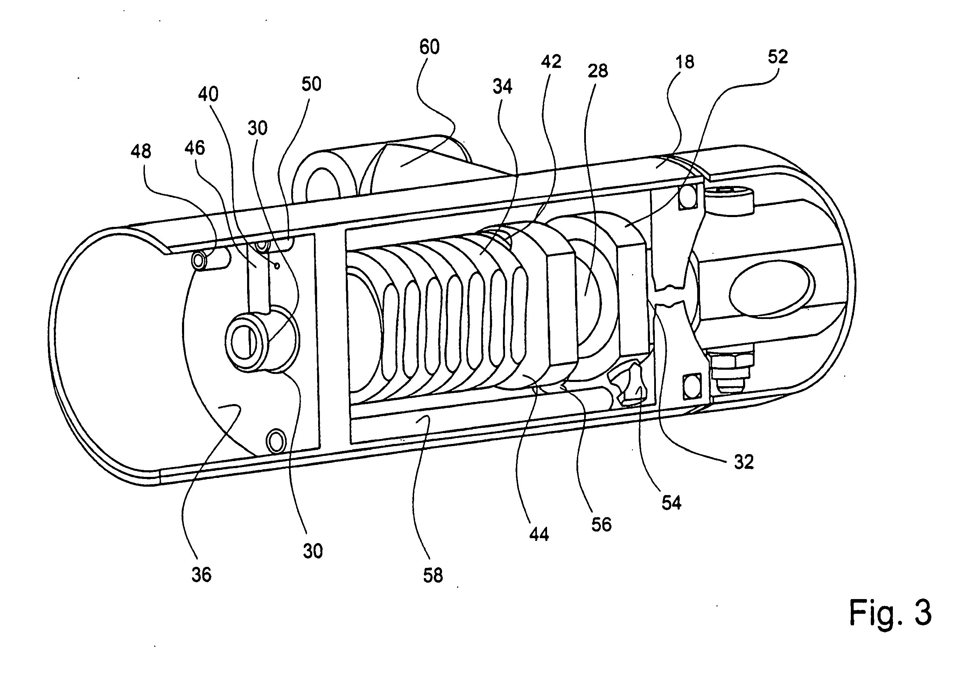

Die Tragrohre 16, 18 sind - wie in der Fig. 3 - mit dem Scheitelrohr 20 über die Schräglenkeraufhängungen 68,70 verbunden, die aus den gelenkig einerseits mit dem Tragrohr 18 und andererseits mit dem Scheitelrohr 20 verbundenen Hebeln 72, 74 bestehen, wobei die Verlängerung von die Anlenkpunkte durchsetzenden Geraden sich in dem fiktiven Drehpunkt 76 der Wippe 10 schneiden, der in der Höhe des Angriffspunkt der Staudruckkraft Fₐₑᵣₒ verläuft.

Als besonderer Vorteil des erfindungsgemäßen Federungsprinzips ist anzusehen, dass die Einwirkung der Staudruckkraft F₍ₐₑᵣₒ₎ auf die Wippenfederung eliminiert wird. Die Staudruckkraft wird durch die Axiallagerung der Welle 28 aufgenommen und hat somit keinen Einfluss auf die Federung des Schleifstückes. Bei Hochgeschwindigkeitsstromabnehmern kann die Staudruckkraft sehr hoch sein. Bei bekannten Wippenkonstruktionen kann diese Staudruckkraft die Arbeit der Wippenfeder negativ beeinflussen bzw. überhaupt verhindern. All diese Nachteile werden durch die erfindungsgemäße Lehre vermieden.

Des Weiteren kann die Federeinrichtung - im Ausführungsbeispiel der Fig. 4 die Biegestabfedern 35, 37, 39 bzw. die Schraubenfeder 34 nach Fig. 3 - in einem geschlossenen Profil eingebaut werden. Dies wirkt sich im Hochgeschwindigkeitseinsatz positiv auf die Lärmemission (Aeroakustik) und auf den Luftwiderstand (Aerodynamik) aus.

Die Wippe lässt sich bezüglich Schleifstückabstand, Schleifstücklänge, Schleifstückgewicht und Anpresskraftvorgaben hervorragend adaptieren.

## Patentansprüche

1. Wippe (10) für einen Stromabnehmer für elektrisch betriebene Fahrzeuge umfassend quer zur Fahrzeuglängsachse verlaufende Schleifleisten (12, 14), jeweils zwei von jeder Schleifleiste ausgehende Hebeleinrichtungen (24, 26), die mit in in Fahrzeuglängsachse sich erstreckenden Tragrohren (16, 18) verlaufenden Halteelementen verbunden sind, ein quer zur Fahrzeugslängsachse verlaufendes Tragorgan (18), das mit den Tragrohren verbunden ist, sowie Federeinrichtungen (34, 35, 37, 39), die von den Hebeleinrichtungen erzeugte erste Drehmomente entgegengerichtete zweite Drehmomente erzeugen,
**dadurch gekennzeichnet,**
**dass** jede Hebeleinrichtung (24, 26) mit einer sich in einem der Tragrohre (16, 18) erstreckenden das Halteelement bildenden Welle (28) verbunden ist, dass die Welle über zumindest ein erstes Lager (36) in dem Tragrohr axial und radial gelagert ist, dass das erste Lager ortsfest mit dem Tragrohr verbunden ist und dass von der Welle oder einer mit der Welle ortsfest verbundenen Halterung die Federeinrichtung (34, 35, 37, 39) ausgeht, die ihrerseits mit dem ersten Lager verbunden ist, wobei
in dem Tragrohr (16, 18) zwei unabhängig voneinander drehbar und gegen ein axiales Verschieben gesicherte Wellen (28) angeordnet sind, von denen jeweils eine mit einer von einer der Schleifleisten (12, 14) ausgehenden Hebeleinrichtung (24, 26) verbunden ist.

2. Wippe nach Anspruch 1,
**dadurch gekennzeichnet,**
**dass** die Federeinrichtung (34) eine Drehfeder wie Schraubenfeder oder entlang der Welle sich erstreckende Stabfedern (35, 37,39) sind.

3. Wippe nach Anspruch 1,
**dadurch gekennzeichnet,**
**dass** von der Welle (28) Vorsprünge (54, 56) abragen, zwischen denen ein von stab verläuft.

4. Wippe nach zumindest einem der vorhergehenden Ansprüche,
**dadurch gekennzeichnet,**
**dass** von der Welle (28) ein Vorsprung wie Stift (46) ausgeht, der zwischen zwei ortsfesten von dem Tragrohr (18) oder einem mit diesem verbundenen Lager wie das erste Lager (36) ausgehenden und Drehwinkel der Welle (28) begrenzenden Anschlagen (48, 50) verläuft.

5. Wippe nach zumindest einem der vorhergehenden Ansprüche,
**dadurch gekennzeichnet,**
**dass** die Hebeleinrichtung (24, 26) aus einem von der Schleifleiste (12, 14) ausgehenden Tragarm (64, 66) und einem mit diesem gelenkig verbundenen Schwenkhebel (60, 62) besteht, der seinerseits mit der Welle (28) verbunden ist.

6. Wippe nach vorzugsweise einem der vorhergehenden Ansprüche,
**dadurch gekennzeichnet,**
**dass** jedes Tragrohr (16, 18) über Hebel wie Schräglenkerhebel (72, 74) mit dem Tragorgan wie dem Scheitelrohr (20) derart verbunden ist, dass sich ein scheinbarer Drehpunkt (76) für die Tragrohre ergibt, der im Bereich vom Schwerpunkt der Wippe (10) bzw. Höhe von Angriffspunkt von auf die Wippe einwirkendem Staudruck Fₐₑᵣₒ verläuft.

7. Wippe nach Anspruch 6,
**dadurch gekennzeichnet,**
**dass** die Anlenkpunkte jeweiliger paarweise angeordneter Schräglenkerhebel (72, 74) von jeweils einer Geraden durchsetzt sind, die sich in dem scheinbaren Drehpunkt (76) schneiden.

8. Wippe nach zumindest Anspruch 2,
**dadurch gekenntzeichnet**,
dass das erste Lager (36) ein erster Lagerbock ist, der im Bereich eines ersten Endes (30) der Welle (28) angeordnet ist, dass im Bereich des zweiten Endes der Welle ein zweiter die Welle drehbar abstützender Lagerbock (40) in dem Tragrohr (16, 18) angeordnet ist und dass die Halterung ein von der Welle (28) abregender Flansch (38) mit Durchbrechungen wie Bohrungen (52, 54, 56) ist, die von den die Federeinrichtung bildenden Stabfedern (35, 37, 39) durchsetzt sind.

9. Wippe nach Anspruch 8,
**dadurch gekennzeichnet,**
**dass** die Stabfedern (35, 37, 39) die Durchbrechungen wie die Bohrungen (52, 54, 56) axial verschiebbar durchsetzen.

10. Wippe nach zumindest einem der vorhergehenden Ansprüche,
**dadurch gekennzeichnet,**
**dass** die sich entlang der Welle (28) erstreckenden Stabfedern (35, 37, 39) eine Umhüllende bilden, die koaxial zu der Welle verläuft und auf der die Stabfedern zueinander vorzugsweise gleichmäßig beabstandet angeordnet sind, wobei insbesondere die Umhüllende im Wesentlichen einen kreis-, ellipsen- oder mehreckig - wie viereckförmigen Querschnitt aufweist.

11. Wippe nach zumindest Anspruch 1,
**dadurch gekennzeichnet,**
**dass** die Wippe (10) über vier jeweils Stabfedern (35, 37, 39) umfassende Federpakete abgefedert ist, die sich jeweils entlang einer Welle (12) erstrecken.

## Claims

1. Rocker (10) for a current collector for electrically powered vehicles, comprising contact strips (12, 14) running transversely to the vehicle longitudinal axis, two lever devices (24, 26) emanating from each contact strip and connected to holding elements running in carrying tubes (16, 18) extending in the vehicle longitudinal axis, a carrying element (18) running transversely to the vehicle longitudinal axis and connected to the carrying tubes, and spring devices (34, 35, 37, 39) generating second torques opposite first torques generated by the lever devices,
**wherein**
each lever device (24, 26) is connected to a shaft (28) extending inside one of the carrying tubes (16, 18) and forming the holding element, wherein the shaft is mounted axially and radially inside the carrying tube by at least one first bearing, and wherein the spring device (34, 35, 37, 39) emanates from the shaft or from a mounting stationarily connected to the shaft and is connected in turn to said first bearing, with two shafts (28) rotatable independently of one another and secured against axial movement being arranged inside the carrying tube (16, 18), each of which shafts is connected to a lever device (24, 26) emanating from one of the contact strips (12, 14).

2. Rocker according to Claim 1,
**wherein**
the spring device (34) is a torsion spring such as a helical spring, or bar springs (35, 37, 39) extending along the shaft.

3. Rocker according to Claim 1,
**wherein**
projections (54, 56) protrude from the shaft (28) between which projections passes a further spring element (58) such as a spring bar emanating from the carrying element (16, 18).

4. Rocker according to at least one of the preceding claims,
**wherein**
a projection such as a pin (46) emanates from the shaft (28) and passes between two stationary stops (48, 50) emanating from the carrying tube (18) or from a bearing such as the first bearing (36) connected thereto and limiting the rotation angle of the shaft (28).

5. Rocker according to at least one of the preceding claims,
**wherein**
the lever device (24, 26) comprises a carrying arm (64, 66) emanating from the contact strip (12, 14) and a swivel lever (60, 62) hinge-connected thereto and in turn connected to the shaft (28).

6. Rocker according to preferably at least one of the preceding claims,
**wherein**
each carrying tube (16, 18) is connected by levers such as tilted-rod levers (72, 74) to the carrying element such as the apex tube (20) such that an apparent pivot point (76) for the carrying tubes is obtained that is in the area of the center of gravity of the rocker (10) or the height of the point of application for the dynamic pressure Fₐₑᵣₒ acting on the rocker.

7. Rocker according to Claim 6,
**wherein**
the articulation points of tilted-rod levers (72, 74) arranged in pairs are each passed through by a straight line, said straight lines intersecting at the apparent pivot point (76).

8. Rocker according to at least Claim 2,
**wherein**
the first bearing (36) is a first bearing pedestal which is arranged in the area of a first end (30) of the shaft (28), wherein in the area of the second end of the shaft (28) a second bearing pedestal (40) rotatably supporting the shaft is arranged in the carrying tube (16, 18) and wherein the holder is a flange (38) projecting from the shaft (28) and having penetrations such as holes (52, 54, 56) through which pass the bar springs (35, 37, 39) forming the spring device.

9. Rocker according to Claim 8,
**wherein**
the bar springs (35, 37, 39) pass through the penetrations such as holes (52, 54, 56) in axially movable manner.

10. Rocker according to at least one of the preceding claims,
**wherein**
the bar springs (35, 37, 39) extending along the shaft (28) form an envelope running coaxially to the shaft and on which the rod springs are arranged preferably at a uniform distance from one another, said envelope in particular having a substantially circular, elliptical or polygonal, such as quadrangular, cross-section.

11. Rocker according to at least Claim 1,
**wherein**
the rocker (10) is cushioned by spring assemblies each comprising four bar springs (35, 37, 39) and each extending along a shaft (12).

## Revendications

1. Archet (10) pour un pantographe destiné à des véhicules à propulsion électrique, comprenant des bandes de frottement (12, 14) s'étendant transversalement à l'axe longitudinal du véhicule, respectivement deux dispositifs à levier (24, 26) partant de chaque bande de frottement et reliés à des éléments de maintien s'étendant dans des tubes porteurs (16, 18) orientés dans l'axe longitudinal du véhicule, un organe porteur (18) s'étendant transversalement à l'axe longitudinal du véhicule et relié aux tubes porteurs, ainsi que des dispositifs à ressort (34, 35, 37, 39) qui génèrent des seconds couples de rotation dans le sens contraire aux premiers couples de rotation générés par les dispositifs à levier,
**caractérisé en ce**
**que** chaque dispositif à levier (24, 26) est relié à un arbre (28) constituant l'élément de maintien s'étendant dans l'un des tubes porteurs (16, 18), que l'arbre est logé axialement et radialement dans le tube porteur par au moins un premier palier (36), que le premier palier est relié fixement au tube porteur, et que de l'arbre ou d'un support relié fixement à l'arbre, part le dispositif à ressort (34, 35, 37, 39) qui est quant à lui relié au premier palier, sachant que dans le tube porteur (16, 18) sont disposés deux arbres (28) pivotants indépendamment l'un de l'autre et assurés contre un déplacement axial, et qu'un dispositif à levier (24, 26) partant de chacun d'eux est relié à l'une des bandes de frottement (12, 14).

2. Archet selon la revendication 1,
**caractérisé en ce**
**que** le dispositif à ressort (34) est constitué par un ressort de torsion tel qu'un ressort cylindrique ou par des barres de torsion (35, 37, 39) s'étendant le long de l'arbre.

3. Archet selon la revendication 1,
**caractérisé en ce**
**que** de l'arbre (28) dépassent des parties saillantes (54, 56) entre lesquelles se déplace un autre élément à ressort (58) tel qu'une barre de torsion partant de l'élément porteur (16, 18).

4. Archet selon au moins une des revendications précédentes,
**caractérisé en ce**
**que** de l'arbre (28) part une partie saillante telle qu'une cheville (46) qui se déplace entre deux butées (48, 50) fixes qui partent du tube porteur (18) ou d'un palier relié à celui-ci, tel que le premier palier (36), et limitent l'angle de rotation de l'arbre (28).

5. Archet selon au moins une des revendications précédentes,
**caractérisé en ce**
**que** le dispositif à levier (24, 26) est constitué par un bras porteur (64, 66) partant de la bande de frottement (12, 14) et par un levier pivotant (60, 62) relié à celle-ci de manière articulée et qui est quant à lui relié à l'arbre (28).

6. Archet selon de préférence l'une des revendications précédentes,
**caractérisé en ce**
**que** chaque tube porteur (16, 18) est relié à l'organe porteur tel que le tube supérieur (20) par un levier tel qu'un levier de commande oblique (72, 74) de manière telle qu'il en résulte un centre de rotation virtuel (76) pour les tubes porteurs, qui se situe dans la zone du centre de gravité de l'archet (10) ou à hauteur du centre de poussée de la pression dynamique Fₐₑᵣₒ agissant sur l'archet.

7. Archet selon la revendication 6,
**caractérisé en ce**
**que** les points d'articulation des leviers de commande obliques (72, 74) respectifs disposés par paires sont respectivement traversés par une droite, et que ces droites se coupent au centre de rotation virtuel (76).

8. Archet selon au moins la revendication 2,
**caractérisé en ce**
**que** le premier palier (36) est un palier support qui est disposé dans la zone d'une première extrémité (30) de l'arbre (28), que dans la zone de la seconde extrémité de l'arbre est disposé dans le tube porteur (16, 18) un second palier support (40) supportant l'arbre de manière pivotante, et que le support est une bride (38) faisant saillie sur l'arbre (28) et comportant des ouvertures, telles que des perçages (52, 54, 56), qui sont traversées par les barres de torsion (35, 37, 39) constituant le dispositif à ressort.

9. Archet selon la revendication 8,
**caractérisé en ce**
**que** les barres de torsion (35, 37, 39) traversent les ouvertures telles que les perçages (52, 54, 56) tout en étant mobiles dans le sens axial.

10. Archet selon au moins une des revendications précédentes,
**caractérisé en ce**
**que** les barres de torsion (35, 37, 39) s'étendant le long de l'arbre (28) forment une enveloppante s'étendant coaxialement à l'arbre et sur laquelle les barres de torsion sont régulièrement disposées de préférence de manière équidistante, sachant qu'en particulier l'enveloppante présente une section transversale pour l'essentiel circulaire, elliptique ou polygonale telle que quadrangulaire.

11. Archet selon au moins la revendication 1,
**caractérisé en ce**
**que** l'archet (10) est suspendu par quatre blocs-ressorts comprenant chacun des barres de torsion (35, 37, 39) et s'étendant chacun le long d'un arbre (12).
